# EUROPEAN PATENT SPECIFICATION

(11) **EP 1 946 046 B1**
(45) Date of publication and mention of the grant of the patent: **15.09.2010**
(21) Application number: 06808453.2
(22) Date of filing: 07.11.2006
(51) Int. Cl.: G01D 5/12, G01B 5/00

(54) **POSITION DETECTOR WITH FLEXIBLE MOUNT**
POSITIONSDETEKTOR MIT FLEXIBLER ANBRINGUNG
DÉTECTEUR DE POSITION À MONTURE FLEXIBLE

(30) Priority: 07.11.2005 GB 0522698
(43) Date of publication of application: 23.07.2008
(73) Proprietor: Newall Measurement Systems Limited, Leicestershire LE18 4XH (GB)
(72) Inventor: HUDMAN, Frederick, Mark, Hamilton Leicestershire LE5 1BG (GB); DRIVER, John, Frederick, Leicester Leicestershire LE3 2WD (GB)
(74) Representative: Merrifield, Sarah Elizabeth
(86) International application number: PCT/GB2006/004158
(87) International publication number: WO 2007/052066

(56) References cited:
- US-A- 3 218 591
- US-A- 4 420 890
- US-A- 5 642 043

## Description

The present invention relates to a position detector with a flexible mount. It is particularly suitable for, although not limited to, a position sensing device mounted on a machine tool such as press brake.

Many machines have two parts which are movable relative to one another and for which it is required to measure relative displacement between the two parts. Accordingly, various types of position sensor have been developed which include two members, fixed to the first and second parts of the machine tool respectively, which measure relative displacement between them.

One example is an optical encoder which includes an elongate glass scale along which an optical reader is passed. Another example is an inductive position detector of the type described in GB 1513567 and GB 2377497 for example. This type of detector includes a scale in the form of an elongate magnetic element which has a periodically varying dimension in a direction perpendicular to its longitudinal axis. A transducer which surrounds and travels along the length of the elongate magnetic element is used to induce a magnetic field in the element. The periodic variations in the dimension of the element result in detectable periodic variations in the magnetic field and provide corresponding periodically varying signalling which can be used to determine the relative displacement of the element and the transducer.

Clearly for both these types of detector the reader and elongate scale must have a high degree of alignment to ensure they are freely movable relative to one another and the scale can still be read to provide repeatable and accurate readings. Since the reader and the scale are attached to the relatively movable parts of a machine tool, those parts would ideally have high tolerances in their relative movement. However, this is not always possible. A typical example is a press brake machine used for forming materials e.g. by bending, trimming or punching. The large forces required in metal forming operations can lead to deformation of the machine so that its movement is not sufficiently tightly constrained to accommodate the proper functioning of the aforementioned types of position detectors. For example, the body of the machine and the press may not run along truly parallel axes and or may not move in a repeatable fashion.

Therefore, it is necessary to mount the position detector on the machine in such a way to accommodate this movement and allow the detector to function properly.

A conventional system uses two standard ball joints at 90° rotation to one another, connected by a rod. This mechanism is typically used to link the reader head of the detector to the body or fixed part of the machine. The scale is attached to the moving, press member of the machine. The compounded action of the ball joints provides the degree of freedom generally required. However, even using standard parts, such compound ball joints are relatively costly to implement and need to be to be lubricated from time to time, requiring running maintenance.

Conventionally, as mentioned above, the compound ball joint mechanism is used to link the head of the position detector to the machine. This is because, for optical detectors using glass scales, in order to work properly the reader head must remain at a constant height relative to the scale and therefore the reader head mechanism has to be carefully guided and constrained. One prior art example incorporates a linear guide rail to provide this alignment control for the reader head. However, this is a particularly complex and therefore expensive solution.

The present invention provides a position detector for measuring the position of a first body relative to a second body, comprising a reader device mountable on the first body, an elongate element having a longitudinal axis and mountable on the second body, the reader device and elongate element being movable relative to each other, and mounting means to mount the elongate element on the second body, wherein the mounting means comprises a flexible member secured to a first end of the elongate element and securable to the second body, wherein the flexible member is substantially rigid in a direction parallel to the longitudinal axis and flexible in a direction non-parallel to the longitudinal axis such that the flexible member supports the whole weight the elongate element and allows relative movement between the reader device and the elongate element to occur in a direction parallel to the longitudinal axis.

In this way, a mount is provided which is simple and cost effective to manufacture, install and maintain, while providing a greater freedom of movement over the prior art mounts.

Preferably, the flexible member comprises a portion of cable having a core surrounded by a plurality of twisted strands. Most preferably, the core is of a substantially similar construction, and the strands are stainless steel. This type of cable provides optimum characteristics for the mount.

Conveniently a first mounting block is rigidly secured to a first end of the flexible member, and a second mounting block is rigidly secured to a second end of the flexible member, one block being rigidly mounted to the elongate element and the other block being rigidly mountable to the second body. This provides a simple way to secure the mount in position.

The invention also provides a machine comprising a position detector of the aforementioned type, wherein the first and second bodies form part of the machine.

In use, the position detector may be secured to the machine with the longitudinal axis of the elongate element in a substantially vertical orientation.

In this case, the mounting means may be positioned beneath the elongate element in use.

Alternatively, the mounting means may be positioned above the elongate element in use and the elongate element is suspended from it.

The machine may comprise a press brake.

The present invention will now be described in detail, by way of example only, and with reference to the accompanying drawings in which:
Figure 1 is a schematic diagram of a machine such as a press brake with a position detector attached using a flexible mount in accordance with the present invention;
Figure 2 is an enlarged side view of a flexible mount according to an embodiment of the invention;
Figure 3 illustrates how the mount shown in Figure 2 accommodates tilt and rotation; and
Figure 4 illustrates how the mount shown in Figure 2 accommodates shear.

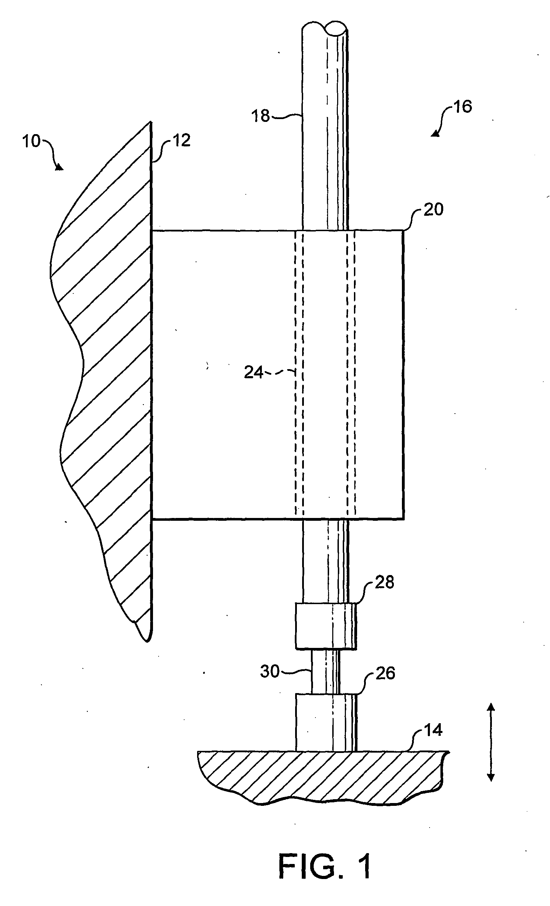

An embodiment of the present invention is shown in schematic form only in Figure 1, mounted on a machine such as press brake 10. The press brake 10 consists of a fixed machine body 12 and a movable press 14, which moves up and down relative to the body 12. A position detector 16 is fitted to the press brake 10. The position detector 16 consists of a elongate scale 18 and reader head 20.

For example, the position detector 16 may be an inductive position detector of the type described in GB 2377497 in which the scale 18 consists of a tube containing a row of magnetic balls constrained against relative movement and in point of contact with one another. The head 20 consists of a casing containing induction coils to induce a magnetic field in the line of balls and pick-up coils to detect how the induced magnetic field changes as the reader is moved axially relative to the scale. However, other types of position detector such as magnetic tape or optical detectors using a glass scale and optical reader head may equally be used.

Preferably, the reader head 20 is rigidly mounted to the machine body 12 and thus remains stationary with it. Consequently, the scale 18 is mounted to the press 14 by the flexible mount 22 of the present invention, and moves up and down with it. The mount 22 supports the whole weight of the scale 18 so that no further mounting or support means is necessary. As the scale 18 moves up and down it runs through a channel 24 formed in the reader head 20.
Channel 24 acts as a guide for the scale and the flexible mount 22 accommodates any shifting of the scale which is needed. In particular, it allows the scale 18 to move slightly relative to the press 14 as the latter goes up and down, ensuring that the scale 18 can run smoothly through the channel 24 in the reader head 20 without snagging or jamming.

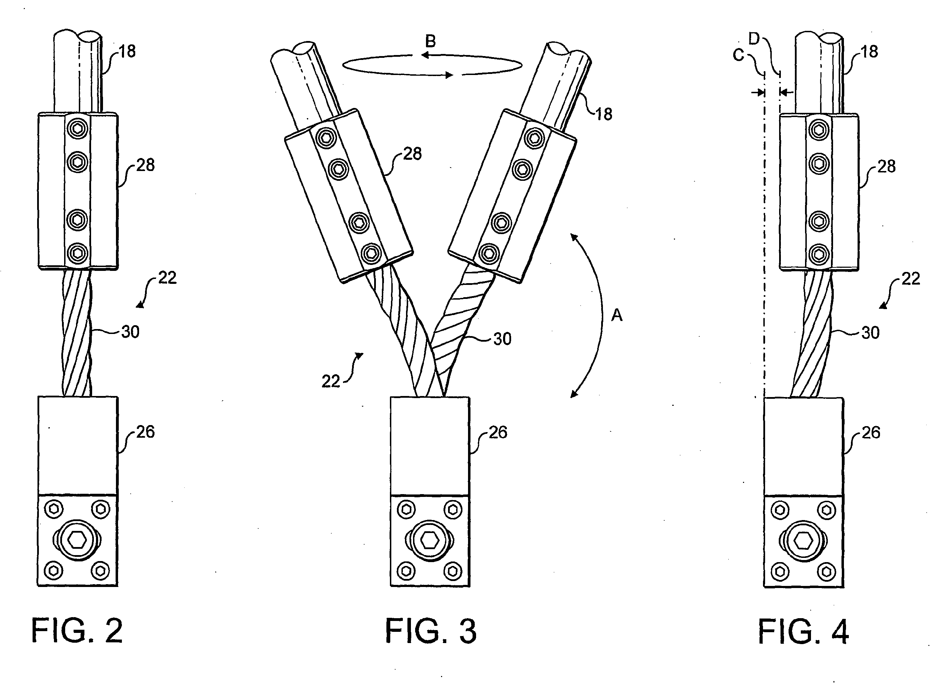

The flexible mount 22 is shown in more detail in Figure 2. The mount 22 consists of a first block 26 rigidly secured to the press 14 in any convenient manner, such as by screws. A second block 28 is rigidly secured to the scale 18 in any convenient manner, such as also by screws. Between the two blocks 26, 28 is a short length of cable 30 is secured. This is preferably a stainless steel stranded core surrounded by a plurality of twisted stainless steel strands.

The cable 30 must be of a material and construction which is stiff enough to support the scale 18 and the second block 28, whilst being flexible enough to accommodate movement of the scale 18 and the second block 28 relative to the first block 26 and the press 14 as described below. Accordingly, the cable 30 is substantially rigid in a direction parallel to its longitudinal axis so that it does not compress or stretch under compression or tension and so is able to support the weight of the scale 18. However, it is sufficiently flexible to accommodate movement in a direction non-parallel to its longitudinal axis. The stainless steel core is preferred in order to provide this functionality, although other materials and constructions are possible. For example, non metallic cores may be used where greater flexibility is required.

As shown in Figure 3, the flexibility of the cable 30 allows the scale 18 and block 28 to tilt relative to the lower block 26 and press 14 (see arrows A). In addition, it allows rotation of a full 360° about the longitudinal axis of the lower block 26 (see arrows B). The cable 30 also allows some twist about its longitudinal axis.

As shown in Figure 4, the cable 30 also accommodates shear compliance, which is of particular importance in the press brake field. This occurs when the press 14 is moving up and down along an axis C which is substantially parallel to, but laterally displaced from, an axis D of the machine body 12. As shown, the flexible cable 30 allows the scale 18 to be shifted laterally relative to the longitudinal axis of the lower block 26, whilst remaining parallel to that axis.

Clearly, the flexible cable 30 may accommodate several different types of movement at the same time. Thus, the greatest possible degree of freedom of movement of the scale 18 relative to the fixed block 26 and the press 14 is catered for by a mechanism that is both simple and cost effective to manufacture, install and maintain.

In use, the present invention would typically be installed with the flexible mount 22 at the bottom of a vertically mounted scale 18 and the reader head 20 would be located such that when the press brake 10 is open, the reader head 20 is at the bottom end of the scale 18, close to the flexible mount. Thus, when the press brake 10 is open the reader head 20 and the scale 18 can be aligned during installation to minimise any stress on the flexible mount 22. Optionally, the reader head 20 might be provided with bearings in the channel 24, such as oil impregnated bearings, to aid the alignment and movement of the scale 18.

However, it ,is not essential for the flexible mount 22 to be installed at the lower end of a vertically mounted scale 18. It is equally possible for the flexible mount 22 to be used at the top, with a vertically mounted scale 18 suspended from it. In either case the mount is sufficient to support the whole weight of the scale 18.

## Claims

1. A position detector (16) for measuring the position of a first body (12) relative to a second body (14), comprising a reader device (20) mountable on the first body (12), an elongate element (18) having a longitudinal axis and mountable on the second body (14), the reader device (20) and elongate element (18) being movable relative to each other, and mounting means (22) to mount the elongate element (18) on the second body (14), wherein the mounting means (22) comprising a flexible member (30) secured to a first end of the elongate element (18) and securable to the second body (14), wherein the flexible member (30) is substantially rigid in a direction parallel to the longitudinal axis and flexible in a direction non-parallel to the longitudinal axis such that the flexible member (30) supports the whole weight of the elongate element (18) and allows relative movement between the reader device (20) and the elongate element (18) to occur in a direction parallel to the longitudinal axis.

2. A position detector (16) as claimed in claim 1, wherein the flexible member (30) comprises a cable having a core surrounded by a plurality of twisted strands.

3. A position detector (16) as claimed in claim 2, wherein the core is stainless steel.

4. A position detector (16) as claimed in claim 2 or claim 3, wherein the strands are stainless steel.

5. A position detector (16) as claimed in any preceding claim, wherein a first mounting block (26) is rigidly secured to a first end of the flexible member (30), and a second mounting block (28) is secured to a second end of the flexible member (30) , one block (28) being rigidly mounted to the elongate element (18) and the other block (26) being rigidly mountable to the second body (14).

6. A machine (10) comprising a position detector (16) as claimed in any preceding claim wherein the first and second bodies (12, 14) form part of the machine.

7. A machine (10) as claimed in claim 6 wherein in use the position detector (16) is secured to the machine (10) with the longitudinal axis of the elongate element (18) in a substantially vertical orientation.

8. A machine (10) as claimed in claim 7, wherein in use the mounting means (22) is positioned beneath the elongate element (18).

9. A machine (10) as claimed in claim 7, wherein in use the mounting means (22) is positioned above the elongate element (18) in use and the elongate element (18) is suspended from it.

10. A machine (10) as claimed in any claims 6 to 9, wherein the machine comprises a press brake.

## Patentansprüche

1. Positionsdetektor (16) zur Messung der Position eines ersten Aufbaus (12) relativ zu einem zweiten Aufbau (14), wobei der Positionsdetektor ein auf dem ersten Aufbau (12) montierbares Lesegerät (20), ein längliches Bauelement (18), welches eine Längsachse aufweist und auf dem zweiten Aufbau (14) montierbar ist, wobei das Lesegerät (20) und das längliche Bauelement (18) relativ zueinander beweglich sind, sowie eine Befestigungsvorrichtung (22) zur Befestigung des länglichen Bauelements (18) auf dem zweiten Aufbau (14) aufweist, **dadurch gekennzeichnet, dass** die Befestigungsvorrichtung (22) ein an einem ersten Ende des länglichen Bauelement (18) befestigtes und an dem zweiten Aufbau (14) befestigbares flexibles bzw. biegsames Bauteil (30) aufweist, wobei das flexible Bauteil (30) in eine Richtung parallel zur Längsachse im Wesentlichen starr ist und in eine nicht parallele Richtung zur Längsachse flexibel ist, so dass das flexible Bauteil (30) das Gesamtgewicht des länglichen Bauelements (18) trägt und ermöglicht, dass eine Relativbewegung zwischen dem Lesegerät (20) und dem länglichen Bauelement (18) in eine Richtung parallel zur Längsachse erfolgt.

2. Positionsdetektor (16) nach Anspruch 1, **dadurch gekennzeichnet, dass** das flexible Bauteil (30) ein Kabel mit einer Kabelseele aufweist, welche von einer Vielzahl verdrillter Einzeldrähte bzw. Litzen umgeben ist.

3. Positionsdetektor (16) nach Anspruch 2, **dadurch gekennzeichnet, dass** die Kabelseele aus Edelstahl ist.

4. Positionsdetektor (16) nach Anspruch 2 oder Anspruch 3, **dadurch gekennzeichnet, dass** die Einzeldrähte bzw. Litzen aus Edelstahl sind.

5. Positionsdetektor (16) nach einem der vorhergehenden Ansprüche, **dadurch gekennzeichnet, dass** ein erster Befestigungs- bzw. Aufnahmeblock (26) starr an einem ersten Ende des flexiblen Bauteils (30) befestigt ist, und dass ein zweiter Befestigungs- bzw. Aufnahmeblock (28) an einem zweiten Ende des flexiblen Bauteils (30) befestigt ist, wobei ein Block (28) starr an dem länglichen Bauelement (18) befestigt ist und der andere Block (26) starr an dem zweiten Aufbau (14) befestigbar ist.

6. Maschine (10), welche einen Positionsdetektor (16) gemäß einem der vorhergehenden Ansprüche aufweist, **dadurch gekennzeichnet, dass** der erste und der zweite Aufbau (12, 14) einen Teil der Maschine bilden.

7. Maschine (10) nach Anspruch 6, **dadurch gekennzeichnet, dass** der Positionsdetektor (16) bei Verwendung an der Maschine (10) befestigt ist, wobei die Längsachse des länglichen Bauelements (18) im Wesentlichen vertikal ausgerichtet ist.

8. Maschine (10) nach Anspruch 7, **dadurch gekennzeichnet, dass** die Befestigungsvorrichtung (22) im Einsatz unterhalb des länglichen Bauelements (18) angeordnet ist.

9. Maschine (10) nach Anspruch 7, **dadurch gekennzeichnet, dass** die Befestigungsvorrichtung (22) im Einsatz oberhalb des länglichen Bauelements (18) im Einsatz positioniert ist und dass das längliche Bauelement (18) an diesem aufgehängt ist.

10. Maschine (10) nach einem der Ansprüche 6 bis 9, **dadurch gekennzeichnet, dass** die Maschine eine Abkant- bzw. Gesenkbiegepresse aufweist.

## Revendications

1. Détecteur de position (16) pour mesurer la position d'un premier corps (12) relativement à un second corps (14), comprenant un dispositif de lecture (20) pouvant être monté sur le premier corps (12), un élément oblong (18) ayant un axe longitudinal et pouvant être monté sur le second corps (14), le dispositif de lecture (20) et l'élément oblong (18) étant déplaçables l'un relativement à l'autre, et des moyens de montage (22) pour monter l'élément oblong (18) sur le second corps (14), où les moyens de montage (22) comprennent un élément flexible (30) fixé à une première extrémité de l'élément oblong (18) et pouvant être fixé au second corps (14), où l'élément flexible (30) est sensiblement rigide dans une direction parallèle à l'axe longitudinal et flexible dans une direction non parallèle à l'axe longitudinal de telle sorte que l'élément flexible (30) supporte tout le poids de l'élément oblong (18) et permet un mouvement relatif entre le dispositif de lecture (20) et l'élément oblong (18) dans une direction parallèle à l'axe longitudinal.

2. Détecteur de position (16) selon la revendication 1, dans lequel l'élément flexible (30) comprend un câble ayant une âme entourée par une pluralité de brins torsadés.

3. Détecteur de position (16) selon la revendication 2, dans lequel l'âme est en acier inoxydable.

4. Détecteur de position (16) selon la revendication 2 ou la revendication 3, dans lequel les brins sont en acier inoxydable.

5. Détecteur de position (16) selon l'une quelconque des revendications précédentes, dans lequel un premier bloc de montage (26) est fixé rigidement à une première extrémité de l'élément flexible (30), et un deuxième bloc de montage (28) est fixé à une seconde extrémité de l'élément flexible (30), un bloc (28) étant monté rigidement sur l'élément oblong (18), et l'autre bloc (26) pouvant être monté rigidement sur le second corps (14).

6. Machine (10) comprenant un détecteur de position (16) tel que revendiqué dans l'une quelconque des revendications précédentes, dans laquelle les premier et second corps (12, 14) font partie de la machine.

7. Machine (10) selon la revendication 6, dans laquelle en cours d'utilisation, le détecteur de position (16) est fixé à la machine (10), l'axe longitudinal de l'élément oblong (18) se trouvant dans une orientation sensiblement verticale.

8. Machine (10) selon la revendication 7, dans laquelle en cours d'utilisation, le moyen de montage (22) est positionné en dessous de l'élément oblong (18).

9. Machine (10) selon la revendication 7, dans laquelle en cours d'utilisation, le moyen de montage (22) est positionné au-dessus de l'élément oblong (18) en cours d'utilisation, et l'élément oblong (18) est suspendu à celui-ci.

10. Machine (10) selon l'une quelconque des revendications 6 à 9, dans laquelle la machine comprend une presse-plieuse.
